Europäisches Patentamt

European Patent Office

Office européen des brevets

(19)

(11) Veröffentlichungsnummer: **0 418 663 A1**

## (12) EUROPÄISCHE PATENTANMELDUNG

(21) Anmeldenummer: 90117152.0

(22) Anmeldetag: 06.09.90

(51) Int. Cl.5: **G01H 11/08, A61B 17/22**

(30) Priorität: 22.09.89 DE 3931578

(43) Veröffentlichungstag der Anmeldung:
27.03.91 Patentblatt 91/13

(84) Benannte Vertragsstaaten:
CH DE FR GB LI NL

(71) Anmelder: **Richard Wolf GmbH**
**Pforzheimer Strasse 32**
**W-7134 Knittlingen(DE)**

(72) Erfinder: **Schäfer, Dagobert, Dipl.-Ing.**
**Erasmusweg 9**
**W-7518 Bretten(DE)**
Erfinder: **Zanger, Ulf, Dipl.-Ing.**
**Weingartenerstrasse 91**
**W-7520 Bruchsal 4(DE)**

(74) Vertreter: **Wilcken, Thomas, Dipl.-Ing. et al**
**Musterbahn 1**
**W-2400 Lübeck(DE)**

(54) Piezoelektrisches Membran-Hydrophon.

(57) Das beschriebene piezoelektrische Membran-Hydrophon zur Messung von Druckimpulsen im Fokus eines zur Zertrümmerung von Steinen in einer Körperhöhle dienenden Ultraschallsenders enthält eine PVDF-Folie (1), die in einem Rahmen (4) eingespannt ist. Diese ist auf gegenüberliegenden Seiten mit sich überlappenden, aus einem Edelmetall bestehenden Elektroden (2) mit Anschlüssen (3) zum Ableiten des elektrischen Signals versehen . Die Oberseite der als Membran dienenden Folie (1) ist mit einer elektrisch isolierenden Vergußmasse (7) abgedeckt, die auch den Einspannrahmen (4) vollständig umgibt. Die Schichtdicke der Vergußmasse ist mindestens gleich t/2 multipliziert mit c, wobei t die Zeitdauer des zu messenden Pulses und c die Schallgeschwindigkeit in der Vergußmasse (7) bedeutet.

FIG. 2

Xerox Copy Centre

## PIEZOELEKTRISCHES MEMBRAN-HYDROPHON

Die Erfindung geht von einem bekannten piezoelektrischen Membran-Hydrophon zur Messung von Druckpulsen kurzzeitiger Schallereignisse im Fokus eines zur Zertrümmerung von Steinen in Körperhöhlen dienenden Ultraschallsenders aus, wobei das Hydrophon aus einer PVDF-Folie besteht, die in einem nichtleitenden Rahmen eingespannt ist und auf gegenüberliegenden Seiten mit sich überlappenden, aus Edelmetall bestehenden Elektrodenbereichen mit Anschlüssen zum Ableiten des elektrischen Signals versehen ist.

Es hat sich herausgestellt, daß diese bekannten Membran-Hydrophone sich recht gut für die Messung von Ultraschallimpulsen niedriger Energie, d.h. niedriger Druckwerte eignen, aber in kurzer Zeit bei der Messung von Druckpulsen mit hohen Amplituden unbrauchbar werden, da die Membran dann zu hohen mechanischen Beanspruchungen unterliegt, sich plastisch verformt, was zu einer Veränderung der piezoelektrischen Eigenschaften (spektrale Empfindlichkeit) sowie der Richtcharakteristik führt, so das das Ausmessen des Fokalbereiches eines Ultraschallsenders nicht mehr möglich ist. Weiter erfordern die bekannten Membran-Hydrophone die Verwendung von destilliertem Wasser als umgebendes, schalleitendes Medium, da sonst die Leitfähigkeit des nicht destillier ten Wassers den Frequenzgang, d.h. die spektrale Empfindlichkeit des Hydrophons stark beeinflußt.

Die Aufgabe der Erfindung besteht darin, das eingangs erwähnte piezoelektrische Membran-Hydrophon so auszubilden, daß sehr hohe Druckpulse im Fokalbereich von Ultraschallimpulssendern auch bei Verwendung von undestilliertem Wasser gemessen sowie mechanische Veränderungen und daraus resultierende Meßwertverfälschungen wirksam verhindert werden können.

Diese Aufgabe wird durch die Merkmale des Anspruches 1 gelöst.

Durch die kennzeichnenden Merkmale des Anspruches 1 können Druckpulse hoher Amplitude ohne bleibende Verformung der Folie gemessen werden und es wird die Wandlung eines akustischen Druckpulses in ein proportionales elektrisches Signal gewährleistet. Dabei können alle auftretenden Druckpulse einwandfrei auch bei Benutzung von undestilliertem, also elektrisch leitendem Wasser, gemessen werden. In keinem Fall können dabei Nebenschlüsse zwischen den beiden Elektroden auftreten, da das Eindringen von Wasser zwischen die Folie und die Vergußmasse dadurch verhindert wird, das letztere auch den Rahmen vollständig umgebend abdeckt. Die Reflexion des die Vergußmasse durchlaufenden Primärschalles wird sich nicht dem zu messenden einlaufenden Schall überlagern und damit die Messung nicht verfälschen. Als Vergußmasse wird vorteilhaft z.B. Polyurethan, Epoxidharz, Silikon oder dgl. verwendet.

Die Erfindung ist nachstehend anhand eines in der Zeichnung dargestellten Ausführungsbeispieles erläutert. Es Zeigen:

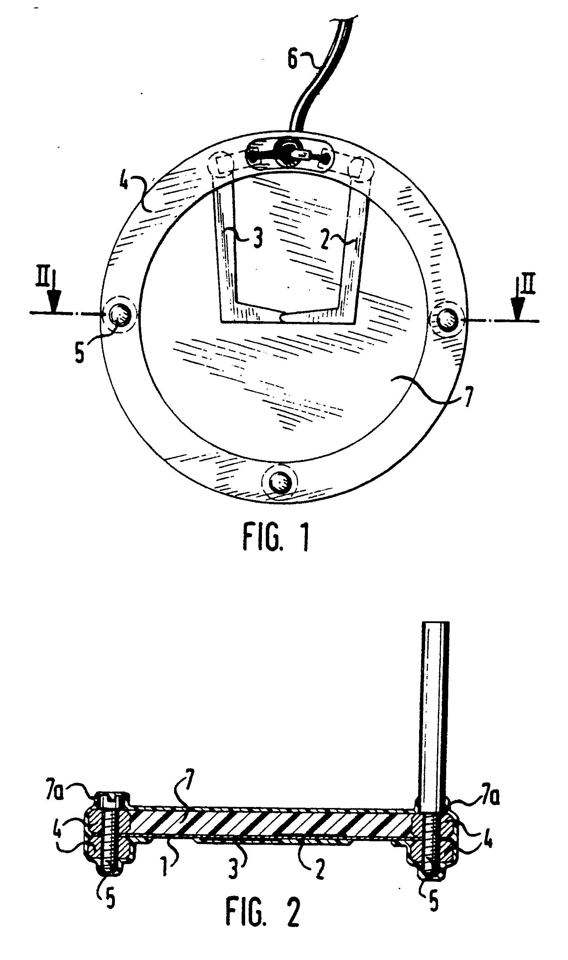

Figur 1 das Membran-Hydrophon nach der Erfindung in Aufsicht,

Figur 2 einen Querschnitt nach Linie II-II der Figur 1.

Das piezoelektrische Membran-Hydrophon besteht aus einer nach entsprechender Behandlung (Polarisierung) in einem Teilbereich (Mitte der sensitiven Fläche) piezoelektrische Eigenschaften aufweisenden, dünnen Folie 1, auf deren sich gegenüberliegenden Seiten Elektroden 2 und 3 aus Edelmaterial, z.B. Gold, aufgedampft sind und deren distale Enden sich über einen möglichst kleinen Flächenbereich (sensitive Fläche) überlappen. Die piezoelektrisch aktivierte Folie 1 ist in einem zweiteiligen, nicht leitenden Rahmen 4 durch Anziehen der Schrauben 5 eingespannt, und an die Enden der Elektroden 2 und 3 greifen die Leiter eines koaxialen Kabels 6 zum Ableiten des durch den zu messenden Druckpulses ausgelösten elektrischen Signals an.

Gemäß der Erfindung ist die obere Fläche bzw. rückseitige heiße Elektrode 2 von einer als Backing dienenden, elektrisch isolierenden Vergußmasse 7 abgedeckt, die auch als Schicht 7a den Einspannrahmen 4 umgibt, so das in keinem Fall Wasser an die obere Elektrode gelangen kann, welches zu einem Nebenschluß führen würde. Damit ist es möglich, mit dem Hydrophon auch in undestilliertem Wasser zu arbeiten. Die Vergußmasse 7 besitzt eine akustische Impedanz etwa gleich der der Folie 1 und besteht insbesondere aus Polyurethan, Epoxidharz, Silikon oder dergleichen. Die Dicke der Vergußmassenschicht 7 muß mindestens gleich t/2 mal c betragen, wobei t die zeitliche Dauer des zu messenden Druckpulses und c die Schallgeschwindigkeit für longitudinale Wellen im Vergußmaterial bedeutet.

Zusätzlich kann sich zwischen der piezoelektrischen Folie und dem Backing eine haftungsvermittelnde Schicht befinden, deren Dicke kleiner ist als die der Folie. Sie wird vor dem Vergießen auf die Folie aufgetragen und verbindet akustisch die Folie mit dem Backing. Sie ist - je nach Backingmaterial - erforderlich, um auch mechanisch eine feste Verbindung zwischen beiden Teilen zu gewährleisten. Diese Schicht muß in bezug auf ihre akustische Impedanz den gleichen Anforderungen wie das Backing selbst genügen, da sie ein Teil von ihm ist.

In der Praxis zeigte sich, daß, insbesondere bei geringer Schichtdicke der aufgedampften Elektroden durch die erodierende Wirkung der zu messenden Hochenergieschallpulse besagte Elektroden zerstört werden. Dem kann durch eine Beschichtung (8) der Vorderseite der PVDF-Folie, z.B. durch Silikon oder selbstklebende PVC-Folie mit geringerer Schichtdicke als die Folie sie besitzt, abgeholfen werden, so daß die Standzeit eines solchen Hydrophons erheblich verlängert werden kann. Bei Benutzung von selbstklebender Folie ergibt sich zudem der Vorteil der Austauschbarkeit im Falle ihrer Zerstörung.

## Ansprüche

1. Piezoelektrisches Membran-Hydrophon zur Messung von Druckimpulsen im Fokus eines zur Zertrümmerung von Steinen in einer Körperhöhle dienenden Ultraschallsenders, bestehend aus einer PVDF-Folie, die in einem Rahmen eingespannt ist und auf gegenüberliegenden Flächen mit sich überlappenden, aus einem Edelmetall bestehenden Elektroden mit Anschlüssen zum Ableiten des elektrischen Signals versehen ist, dadurch gekennzeichnet, daß die Oberseite der als Membran dienenden Folie (1) mit einer elektrisch isolierenden Vergußmasse (7) abgedeckt ist, die auch den Einspannrahmen (4) vollständig umgibt und deren Schichtdicke mindestens gleich $t/2$ multipliziert mit c ist, wobei t die Zeitdauer des zu messenden Pulses und c die Schallgeschwindigkeit in der Vergußmasse (7) bedeutet.

2. Membran-Hydrophon nach Anspruch 1, dadurch gekennzeichnet, daß als Vergußmasse (7) ein Polyurethan,Epoxidharz oder Silikon verwendet ist und das die akustische Impedanz der Vergußmasse derjenigen der Folie entspricht oder etwa entspricht.

3. Membran-Hydrophon nach den Ansprüchen 1 oder 2, dadurch gekennzeichnet, daß auf beiden Seiten der Folie elektrisch nichtleitende, mechanisch stabilisierende und eine voneinander abweichende Schichtdicke aufweisende Vergußmassen angeordnet sind.

4. Membran-Hydrophon nach den Ansprüchen 1, 2 oder 3, dadurch gekennzeichnet, das zwischen der Folie und dem Vergußmaterial eine haftungsfördernde Substanz angeordnet ist, wobei die Vergußmasse und die Substanz mindestens ähnliche akustische Eigenschaften aufweisen.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 179 983 (DORNIER) <br> * Figur 1; Seite 5, Zeilen 5-14 * | 1-4 | G 01 H 11/08 <br> A 61 B 17/22 |
| Y | DE-A-3 146 949 (SIEMENS) <br> * Fig.; Seite 4, Zeilen 9-11,13-18 * | 1-4 | |
| A | US-A-4 653 036 (HARRIS) <br> * Figur 1; Spalte 4, Zeilen 33-36,54-56; Spalte 5, Zeilen 13-15 * | 1,2 | |
| A | EP-A-0 227 985 (SIEMENS) <br> * Spalte 2, Zeilen 8-18; Figur 1 * | 2,4 | |
| A | US-A-4 789 971 (POWERS) | | |

|  | RECHERCHIERTE SACHGEBIETE (Int. Cl.5) |
|---|---|
| | A 61 B <br> B 06 B <br> G 01 H |

Der vorliegende Recherchenbericht wurde für alle Patentansprüche erstellt

| Recherchenort | Abschlußdatum der Recherche | Prüfer |
|---|---|---|
| Den Haag | 11 Dezember 90 | BARTON S.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument